# EUROPEAN PATENT APPLICATION

(11) **EP 4 024 513 A1**
(43) Date of publication of application: **06.07.2022**
(21) Application number: 20905539.1
(22) Date of filing: 14.12.2020
(51) Int. Cl.: H01M 4/36

(54) **LITHIUM-RICH MANGANESE-BASED POSITIVE ELECTRODE MATERIAL AND PREPARATION METHOD THEREFOR AND APPLICATION THEREOF**

(30) Priority: 27.12.2019 CN 201911377165
(71) Applicant: SVOLT ENERGY TECHNOLOGY CO., LTD, Changzhou, Jiangsu 213200 (CN)
(72) Inventor: ZHU, Jinxin, hangzhou, Jiangsu 213200 (CN); WANG, Pengfei, hangzhou, Jiangsu 213200 (CN)
(74) Representative: De Bonis, Paolo
(86) International application number: PCT/CN2020/136072
(87) International publication number: WO 2021/129438

(57) **Abstract**

A lithium-rich manganese-based positive electrode material and a preparation method therefor and an application thereof. The positive electrode material comprises a matrix (10) and a coating layer (20). The coating layer (20) coats the matrix (10). The matrix (10) comprises Li_{1+α}Ni_{β}M_{µ}O_{2- ν}F_{ν} and Li_{2+ α'}M'O_{3- ν'}F_{ν'}. The coating layer (20) comprises M"_{µ'}O_{ν"} and M‴_{µ"}O_{ν‴}. The lithium-rich manganese-based positive electrode material can improve both the rate performance and cycle life of the positive electrode material.

## Description

### TECHNICAL FIELD

The present disclosure relates to the field of batteries, for example, to a lithium-rich manganese-based positive electrode material and a preparation method therefor and an application thereof.

### BACKGROUND

As the European Union and government institutes gradually exert more control on the exhaust emission of oil-fueled automobiles, the clean fuel of automobiles has become a mainstream development trend all around the world. Under such a background, battery electric vehicles driven by power lithium-ion batteries have developed rapidly and have become an important part of the new energy vehicle market. However, although battery electric vehicles have the characteristics of environmental friendliness, the current battery technology still cannot satisfy the usage requirements of consumers, such as endurance mileage and safety issues. In order to solve the problem of range anxiety, people are trying to develop cathode materials with high energy density for lithium-ion batteries.

The lithium-rich manganese-based materials are high energy density cathode materials with large specific discharge capacity, such as xLi₂MnO₃•(1-x)LiMO₂ (M is Ni, Co, Mn, etc.), which not only have high specific discharge capacity but also have good thermal stability. However, the lithium-rich manganese-based materials also have many problems, such as poor rate performance, low cycle capacity retention rate, etc. The manganese content in the lithium-rich manganese-based materials is high, usually as high as 50%, while manganese metal elements have poor metal conductivity, which will reduce the intrinsic ionic conductivity of materials, thus making the materials unable to quickly intercalate and deintercalate lithium ions during charging and discharging under large current densities. In addition, the phase transition of crystal in the cathode material will lead to poor cycle performance. For example, the crystal phase transition of Li₂MnO₃ and LiMO₂ in the material during charging and discharging will greatly reduce the number of sites where lithium ions can be intercalated in the material structure and then affect the capacity. Therefore, the lithium-rich manganese-based positive electrode materials need to be further improved.

### SUMMARY

The summary of the subject matter described herein is given below in detail. This summary is not intended to limit the scope of the claims.

The present disclosure provides a lithium-rich manganese-based positive electrode material and a preparation method therefor and an application thereof.

The present disclosure provides a lithium-rich manganese-based positive electrode material in an embodiment. The lithium-rich manganese-based positive electrode material is of a general formula:

aLi_{1+α}Ni_{β}M_{µ}O_{2-ν}F_{ν}·bLi_{2+α'}M'O_{3-ν'}F_{ν'}·cM"_{µ'}O_{ν"}·dM‴_{µ"}O_{ν‴},

wherein
a + b + c + d = 1, wherein 0 < a < 0.5, 0 < b < 0.6, 0 < c ≤ 0.02, and 0 < d ≤ 0.02;
-0.03 ≤ α ≤ 0.04, 0.4 < β ≤ 1, 0 ≤ µ < 0.6, and 0.005 ≤ ν ≤ 0.02;
0.005 ≤ α' ≤ 0.04, and 0.005 ≤ ν' ≤ 0.02;
1 ≤ µ'≤ 9, and 1 ≤ v" ≤ 12;
1 ≤ µ" ≤ 9, and 1 ≤ ν‴ ≤ 12;
M is at least one selected from the group consisting of Ni, Co, Mn, Al, Mg, Ti, Zr, Zn, Ca, B, Ce, and Cr;
M' is at least one selected from the group consisting of Mn, Ce, Al, Ti, and Mg, and at least one of M' or M includes Mn;
M" is at least one selected from the group consisting of Ti, Li, P, Nb, Al, Mg, Zr, Zn, Ca, B, Ce, and Cr;
M'" is at least one selected from the group consisting of Ti, Nb, B, Al, Mg, Zr, Zn, Ca, B, Ce, Li, and Cr, and M'" and M" are not identical; and
the positive electrode material includes a matrix and a coating layer, wherein the coating layer is coated on the matrix, the matrix includes Li_{1+α}Ni_{β}M_{µ}O_{2-ν}F_{ν} and Li_{2+α'}M'O_{3-ν'}F_{ν'}, and the coating layer includes M"_{µ'}O_{ν"} and M‴_{µ"}O_{ν‴}.

In the positive electrode material provided in an embodiment of the present disclosure, aLi_{1+α}Ni_{β}M_{µ}O_{2-ν}F_{ν}·bLi_{2-α'}M'O_{3-ν'}F_{ν'} represents the matrix which may exist in the form of a solid solution or two crystal phases in a material, and cM"_{µ'}O_{ν"}·dM‴_{µ"}O_{ν‴} represents the coating layers, among which cM"_{µ'}O_{ν"} and dM‴_{µ"}O_{ν‴} correspond to the first coating layer and the second coating layer, respectively, the first coating layer is coated on the matrix and the second coating layer is coated on the first coating layer; or the first coating layer and the second coating layer are alternately coated on the matrix. In an embodiment provided by the present disclosure, the lithium-rich manganese-based positive electrode material can improve both the rate performance and cycle life of the positive electrode material.

In an embodiment, the coating layer includes a first coating layer and a second coating layer, wherein the first coating layer is coated on the matrix and the second coating layer is coated on the first coating layer; or the first coating layer and the second coating layer are alternately coated on the matrix.

In an embodiment, the first coating layer has a thickness of 0.1 nm to 100 nm, such as 0.1 nm, 0.5 nm, 1 nm, 3 nm, 5 nm, 10 nm, 15 nm, 20 nm, 25 nm, 30 nm, 40 nm, 50 nm, 60 nm, 80 nm, 90 nm, 100 nm, etc. The second coating layer has a thickness of 0.1 nm to 200 nm, for example, 0.5 nm, 1 nm, 2 nm, 5 nm, 10 nm, 20 nm, 30 nm, 50 nm, 65 nm, 80 nm, 100 nm, 120 nm, 130 nm, 140 nm, 160 nm, 180 nm, 200 nm, etc.

In an embodiment, the first coating layer has a thickness of 20 nm to 60 nm.

In an embodiment, the second coating layer has a thickness of 20 nm to 100 nm.

In an embodiment, the positive electrode material has a particle size of 1 µm to 17 µm, such as 1 µm, 3 µm, 5 µm, 8 µm, 10 µm, 12 µm, 13 µm, 15 µm, 17µm, etc.

In an embodiment, the positive electrode material has a particle size of 4 µm to 15 µm.

In an embodiment, the positive electrode material has a specific discharge capacity not less than 240 mAh/g at a rate of 1C and a capacity retention rate not less than 92% after 50 charge-discharge cycles.

In an embodiment provided by the present disclosure, the lithium-rich manganese-based positive electrode material has the following advantages. 1. Structurally, the positive electrode active material is composed of a matrix and a coating layer, wherein the coating layer material includes two different coating substances M"_{µ'}O_{ν"} and M‴_{µ"}O_{ν‴}, and on the one hand, both substances have low electrolyte reactivity and strong binding force with matrix materials Li_{1+α}Ni_{β}M_{µ}O_{2-ν}F_{ν} and Li_{2+α'}M'O_{3-ν'}F_{ν'}, which can effectively anchor the surface structure of the matrix material and make the coating layer tightly bonded with the matrix material, thereby significantly improving the structural stability of the positive electrode material and preventing or inhibiting the side reaction between the matrix material and the electrolyte; on the other hand, M"_{µ'}O_{ν"} and/or M‴_{µ"}O_{ν‴} can have ultra-high ionic conductivity, and when being formed on the surface of the matrix material, can significantly improve the solid-liquid interface between the matrix material and the electrolyte, thereby significantly improving the migration and diffusion rate of lithium ions and enhancing the conductivity and rate performance of the positive electrode material. 2. The matrix materials Li_{1+α}Ni_{β}M_{µ}O_{2-ν}F_{ν}, and Li_{2+α'}M'O_{3-ν'}F_{ν'} not only have a high energy density, but also have relatively low manganese content, which makes the resistance to lithium ion intercalation/deintercalation relatively small during charging and discharging under large current, which thus can significantly improve the rate performance and cycle performance of the positive electrode material; in an embodiment, the manganese element can improve the structural stability of the positive electrode material, and compared with the oxygen element, the chemical bond formed by the fluorine element and the transition metal element is more stable, and the presence of both manganese and fluorine elements in the matrix material can achieve the effect of synergistically improving the stability of the crystal structure of the positive electrode material. To sum up, the lithium-rich manganese-based positive electrode material having the above-mentioned structure and general formula not only has good structural stability, high ionic conductivity, and no significant structural change during charging and discharging, but also has a high specific capacity and good rate performance and cycle performance, among which the specific discharge capacity at the rate of 1C is not less than 240 mAh/g and the capacity retention rate after 50 charge-discharge cycles is not less than 92%. Therefore, the positive electrode material can be widely used in the field of high energy density lithium batteries.

The present disclosure provides a method for preparing the lithium-rich manganese-based positive electrode material in an embodiment, the method includes:
(1) carrying out a first calcination treatment on a carbonate containing Ni, M, and M' to obtain a first calcination product, wherein at least one of M or M' includes Mn;
(2) mixing the first calcination product with a lithium salt and a fluorine-containing compound, and carrying out a second calcination treatment to obtain a matrix material; and
(3) mixing the matrix material with an additive containing M" and M‴, and carrying out a third calcination treatment to obtain a lithium-rich manganese-based positive electrode material.

In an embodiment, in step (1), the first calcination treatment is carried out at a temperature of 300°C to 800°C, such as 300°C, 400°C, 500°C, 550°C, 600°C, 700°C, 800°C, etc., for 4 hours to 12 hours, such as 4 hours, 6 hours, 8 hours, 9 hours, 10 hours, 12 hours, etc., in a calcination atmosphere of an oxygen-nitrogen environment with an oxygen content of 0 to 100 v%, such as 3 v%, 5 v%, 10 v%, 15 v%, 20 v%, 30 v%, 40 v%, 50 v%, 60 v%, 70 v%, 80 v%, 90 v%, 95 v%, etc.

In an embodiment, in step (2), the second calcination treatment is carried out at a temperature of 600°C to 950°C, such as 600°C, 700°C, 800°C, 850°C, 900°C, 950°C, etc., for 10 hours to 24 hours, such as 10 hours, 12 hours, 15 hours, 18 hours, 20 hours, 24 hours, etc., in a calcination atmosphere of an oxygen-nitrogen environment with an oxygen content of 0 to 100 v%, such as 3 v%, 5 v%, 10 v%, 15 v%, 20 v%, 30 v%, 40 v%, 50 v%, 60 v%, 70 v%, 80 v%, 90 v%, 95 v%, etc.

In an embodiment, in step (2), the lithium salt is at least one selected from the group consisting of LiOH·H₂O, Li₂CO₃, LiBO₂, BLi₃O₃, Li₃PO₄, LiF, LiHCO₃, LiBF₄, and Li₂S, and the fluorine-containing compound is at least one selected from the group consisting of MgF₂, LiF, NH₄F, ZnF₂, KF, NaF, AlF₃, ZrF₂, and LiBF₄.

In an embodiment, in step (3), the third calcination treatment is carried out at a temperature of 300°C to 900°C, such as 300°C, 400°C, 450°C, 500°C, 600°C, 700°C, 800°C, etc., for 1 hour to 12 hours, such as 1 hour, 2 hours,3 hours, 5 hours, 8 hours, 9 hours, 10 hours, 12 hours, etc., in a calcination atmosphere of an oxygen-nitrogen environment with an oxygen content of 0 to 100 v%, such as 3 v%, 5 v%, 10 v%, 15 v%, 20 v%, 30 v%, 40 v%, 50 v%, 60 v%, 70 v%, 80 v%, 90 v%, 95 v%, etc.

In an embodiment, the additive includes a first additive containing M"/M‴ and a second additive containing M"'/M", wherein the first additive is at least one selected from the group consisting of LiNbO₃, NbF₅, C₁₅H₃₅NbO₅, Nb₂O₅, NbO₂, Nb₂O₃, NbS₂, C₂H₆NbO, and NbF₄, and the second additive is at least one selected from the group consisting of Li₄Ti₅O₁₂, Li₂TiO₃, TiO₂, C₁₂H₂₈TiO₄, TiF₄, Ti(OH)₄, and Ti(SO₄)₂.

In an embodiment, a molar ratio of the additive to the matrix material is (0.001 to 0.03):1, such as 0.001:1, 0.005:1, 0.01:1, 0.02:1, 0.03:1, etc., and a molar ratio of the first additive to the second additive is (0.01 to 1):1, such as 0.01:1, 0.02:1, 0.03:1, 0.05:1, 0.1:1, 0.2:1, 0.3:1, 0.4:1, 0.6:1, 0.8:1, 1:1, etc.

In an embodiment, the first additive and the second additive each independently have a particle size of 1 nm to 200 nm, such as 1 nm, 5 nm, 10 nm, 20 nm, 30 nm, 50 nm, 75 nm, 100 nm, 120 nm, 150 nm, 165 nm, 180 nm, 200 nm, etc.

In an embodiment, step (3) includes: (3-1) mixing the matrix material with the first additive, and carrying out a primary coating calcination treatment to obtain a primary coating calcination product; and (3-2) mixing the primary coating calcination product with the second additive, and carrying out a secondary coating calcination treatment to obtain the lithium-rich manganese-based positive electrode material.

In an embodiment, the primary coating calcination treatment and the secondary coating calcination treatment are each independently carried out at a temperature of 300°C to 900°C, such as 300°C, 400°C, 450°C, 500°C, 600°C, 700°C, 800°C, 900°C, etc., for 1 hour to 12 hours, such as 1 hour, 3 hours, 6 hours, 7 hours, 10 hours, 12 hours, etc., in a calcination atmosphere of an oxygen-nitrogen environment with an oxygen content of 0 to 100 v%, such as 3 v%, 5 v%, 10 v%, 15 v%, 20 v%, 30 v%, 40 v%, 50 v%, 60 v%, 70 v%, 80 v%, 90 v%, 95 v%, etc.

In an embodiment provided by the present disclosure, the prepared lithium-rich manganese-based positive electrode material has both a good rate performance and cycle performance.

In an embodiment provided by the present disclosure, the method for preparing the lithium-rich manganese-based positive electrode material has the following advantages. (1) The method has a simple process and low cost. (2) The first calcination treatment is carried out on the carbonate precursor in advance so that the carbonate precursor can be converted into corresponding oxides; the first calcination product is then mixed with a lithium salt and a fluorine-containing compound and the second calcination treatment is carried out to obtain a matrix material including Li_{1+α}Ni_{β}M_{µ}O_{2-ν}F_{ν}, and Li_{2+α'}M'O_{3-ν'}F_{ν'}, wherein the matrix material not only has high energy density, but also has relatively low manganese content, which makes the resistance to lithium ion intercalation/deintercalation relatively small during charging and discharging under large current, which thus can significantly improve the rate performance and cycle performance of the positive electrode material, and compared with the oxygen element, the chemical bond formed by the fluorine element and the transition metal element is more stable, and the presence of both manganese and fluorine elements in the matrix material can achieve the effect of synergistically improving the stability of the crystal structure of the positive electrode material; then the matrix material is mixed with an additive containing M" and M'" for a third calcination so that the coating materials M"_{µ'}O_{ν"} and M‴_{µ"}O_{ν‴} can be formed on the surface of the matrix material and the coating materials are tightly bonded on the surface of the matrix material, thereby enhancing the conductivity, improving the structural stability of the positive electrode material, and preventing the side reaction between the matrix material and the electrolyte. (3) The lithium-rich manganese-based positive electrode material prepared by the method not only has good structural stability, high ionic conductivity, and no significant structural change during charging and discharging, but also has a high specific capacity and good rate performance and cycle performance, among which the specific discharge capacity at the rate of 1C is not less than 240 mAh/g and the capacity retention rate after 50 charge-discharge cycles is not less than 92%. Therefore, the positive electrode material can be widely used in the field of high energy density lithium batteries.

The present disclosure provides a lithium battery in an embodiment. The lithium battery includes the lithium-rich manganese-based positive electrode material described in an embodiment or a lithium-rich manganese-based positive electrode material prepared by the preparation method described in an embodiment.

In an embodiment provided by the present disclosure, the lithium battery has high energy density, high initial specific discharge capacity, good rate performance and cycle stability, and long cycle life, which improves the electrochemical performance of the lithium battery and prolongs its service life, and can be widely used in the field of new energy vehicles.

The present disclosure provides a vehicle in an embodiment. The vehicle includes the lithium battery described in an embodiment.

In an embodiment of the present disclosure, the vehicle has high safety and long endurance mileage, which improves the competitiveness of the vehicle.

### BRIEF DESCRIPTION OF DRAWINGS

The drawings are used to provide a further understanding of the solutions of the present disclosure, constitute a part of the description, explain the solutions of the present disclosure in conjunction with the embodiments of the present application, and do not limit the solutions of the present disclosure.
FIG. 1 is a structure diagram of a lithium-rich manganese-based positive electrode material according to an example of the present disclosure;
FIG. 2 is a structure diagram of a lithium-rich manganese-based positive electrode material according to an example of the present disclosure;
FIG. 3 is a flowchart of a method for preparing a lithium-rich manganese-based positive electrode material according to an example of the present disclosure;
FIG. 4 is a comparison diagram of specific capacities of button batteries prepared from the lithium-rich manganese-based positive electrode materials corresponding to examples and comparative examples of the present disclosure in the first charge-discharge process;
FIG. 5 is a comparison diagram of specific discharge capacities of button batteries prepared from the lithium-rich manganese-based positive electrode materials corresponding to examples and comparative examples of the present disclosure at different rates; and
FIG. 6 is a comparison diagram of changes of specific discharge capacities with the number of discharge cycles of button batteries prepared from the lithium-rich manganese-based positive electrode materials corresponding to examples and comparative examples of the present disclosure.

### DETAILED DESCRIPTION

Technical solutions of the present disclosure are further described below through specific embodiments in conjunction with the drawings.

It is to be noted that if not in collision, the embodiments and features therein in the present disclosure may be combined with each other. Moreover, terms like "first" and "second" are merely for description and are not to be construed as indicating or implying relative importance or implicitly indicating the number of technical features as indicated.

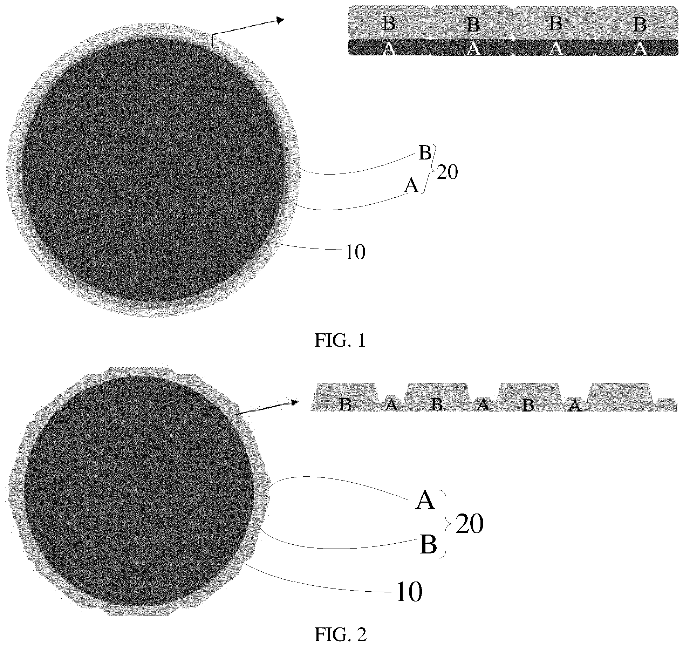

The present disclosure provides a lithium-rich manganese-based positive electrode material in an embodiment. The positive electrode material is of a general formula of aLi_{1+α}Ni_{β}M_{µ}O_{2-ν}F_{ν}·bLi_{2-α'}M'O_{3-ν'}F_{ν'}·cM"_{µ'}O_{ν"}·dM‴_{µ"}O_{ν"},
wherein a + b + c + d = 1, wherein 0 < a < 0.5, 0 < b < 0.6, 0 < c ≤ 0.02, and 0 < d ≤ 0.02; -0.03 ≤ α ≤ 0.04, 0.4 < β ≤ 1, 0 ≤ µ < 0.6, and 0.005 ≤ ν ≤ 0.02; 0.005 ≤ α' ≤ 0.04, and 0.005 ≤ v' ≤ 0.02; 1 ≤ µ' ≤ 9, and 1 ≤ v" ≤ 12; 1 ≤ µ" ≤ 9, and 1 ≤ ν‴ ≤ 12; M is at least one selected from the group consisting of Ni, Co, Mn, Al, Mg, Ti, Zr, Zn, Ca, B, Ce, and Cr; M' is at least one selected from the group consisting of Mn, Ce, Al, Ti, and Mg, and at least one of M' or M includes Mn; M" is at least one selected from the group consisting of Ti, Li, P, Nb, Al, Mg, Zr, Zn, Ca, B, Ce, and Cr; M'" is at least one selected from the group consisting of Ti, Nb, B, Al, Mg, Zr, Zn, Ca, B, Ce, Li, and Cr, and M'" and M" are not identical; and as shown in FIG. 1 or 2, the positive electrode material includes a matrix 10 and a coating layer 20, wherein the coating layer 20 is coated on the matrix 10, the matrix 10 includes Li_{1+α}Ni_{β}M_{µ}O_{2-ν}F_{ν} and Li_{2+α'}M'O_{3-ν'}F_{ν'}, and the coating layer 20 includes M"_{µ'}O_{ν"} and M‴_{µ"}O_{ν‴}. The lithium-rich manganese-based positive electrode material not only has good structural stability, high ionic conductivity, and no significant structural change during charging and discharging, but also has a high specific capacity and good rate performance and cycle performance, among which the specific discharge capacity at the rate of 1C is not less than 240 mAh/g and the capacity retention rate after 50 charge-discharge cycles is not less than 92%. Therefore, the positive electrode material can be widely used in the field of high energy density lithium batteries.

In an embodiment, the coating material M"_{µ'}O_{ν"}/M‴_{µ"}O_{ν‴} may be bonded to the surface of the matrix material through chemical bonds or may be mechanically bonded to the surface of the matrix material.

In an embodiment, the coating layer material and the matrix material are formed on the surface of the matrix material by chemical bonding so that the coating layer and the matrix material can be firmly and tightly bonded together.

In an embodiment, the coating layer 20 of the lithium-rich manganese-based positive electrode material includes two materials: M"_{µ'}O_{ν"} and M‴_{µ"}O_{ν‴}. The two materials respectively form a first coating layer A and a second coating layer B. The first coating layer A and the second coating layer B have two different structures. One of the structures, as shown in FIG. 1, is that the first coating layer A may be coated on the matrix 10 and the second coating layer B may be coated on the first coating layer A. Such a structure may be obtained by mixing the matrix material with M"_{µ'}O_{ν"}/M‴_{µ"}O_{ν‴} in advance and performing primary coating calcination to form the first coating layer A and then mixing the primary coating calcination product with M‴_{µ"}O_{ν‴}/M"_{µ'}O_{ν"} and performing a coating calcination treatment again; The other structure, as shown in FIG. 2, is that the first coating layer A and the second coating layer B are alternately coated on the matrix 10. Such a structure may be obtained by directly mixing the matrix material with M"_{µ'}O_{ν"} and M‴_{µ"}O_{ν‴} and performing a coating calcination treatment. In the present disclosure, a multi-element spatial stereo ordered coating structure including both the first coating layer and the second coating layer is simultaneously formed on the surface of the matrix material, which can enable coating materials with different properties to be formed on the surface of the matrix material at the same time, thereby further facilitating the improvement of the rate performance, cycle life, and cycle capacity retention rate of the lithium-rich manganese-based positive electrode material.

In an embodiment, the coating materials M"_{µ'}O_{ν"} and M‴_{µ"}O_{ν‴} with different element combinations may be selected to make the positive electrode material have different performances and coating effects.

In an embodiment, one of the coating materials M"_{µ'}O_{ν"} and M‴_{µ"}O_{ν‴} is made to have better ionic conductivity, and when such a coating material is formed on the surface of the matrix material, the coating material can play the role of a buffer layer to optimize the solid-liquid interface between the positive electrode material and the electrolyte. Since the solid-liquid interface has high impedance, which leads to a high concentration polarization and then leads to the decrease of the migration rate of lithium ions, after the improvement by such a fast ion conductor coating material, lithium ions can quickly migrate from the positive electrode material to the electrolyte, thereby significantly improve the rate performance. Meanwhile, the other coating material is made to mainly play the role of shielding layer, and when such a coating material is formed on the surface of the matrix material or the surface of the buffer layer, the coating material can significantly reduce the side reaction between positive electrode material particles and the electrolyte, thereby protecting the structural integrity of positive electrode material particles during charging and discharging, and reducing the negative problems such as positive electrode material particle destruction and structure collapse caused by the side reaction and the electrolyte erosion.

In an embodiment, the first coating layer A is formed by a coating material having better ionic conductivity, and the second coating layer B is formed by the other coating material.

In an embodiment, the first coating layer A has a thickness of 0.1 nm to 100 nm, such as 0.5 nm, 1 nm, 5 nm, 10 nm, 20 nm, 30 nm, 50 nm, 75 nm, 100 nm, etc., and the second coating layer B has a thickness of 0.1 nm to 200 nm, for example, 0.5 nm, 1 nm, 5 nm, 10 nm, 20 nm, 30 nm, 50 nm, 75 nm, 100 nm, 120 nm, 150 nm, 165 nm, 180 nm, 200 nm, etc. The inventor found that since the main function of the first coating layer A is to improve the conductivity of the interface between the positive electrode material matrix layer and the electrolyte to make lithium ions migrate and diffuse quickly, if the thickness of the first coating layer is too large, it is not conducive to enhancing the ionic conductivity of the positive electrode material, and since the main function of the second coating layer B is to reduce or inhibit the side reaction between the matrix material and the electrolyte to improve the structural stability of the positive electrode material, if the thickness of the second coating layer is too small, the protective effect on the positive electrode materials is not significant while if the thickness of the second coating layer is too large, the resistance to the migration and diffusion of lithium ions easily becomes large. In the present disclosure, the thickness of the coating layer is controlled to be within the above-mentioned thickness range, and in this way, the stability of the crystal structure of the positive electrode material in the process of the charge-discharge cycle can be further improved and the side reaction between the matrix material and the electrolyte can be prevented on the premise of improving the lithium ion conductivity of the lithium-rich manganese-based positive electrode material.

In an embodiment, the first coating layer A may have a thickness of 20 nm to 60 nm, and the second coating layer B may have a thickness of 20 nm to 100 nm, thereby further improving the ionic conductivity and the stability of the crystal structure of the lithium-rich manganese-based positive electrode material and greatly reducing the side reaction between the matrix material and the electrolyte.

In an embodiment, the ratio of the thickness of the coating layer 20 to the particle size of the matrix 10 may be 1:(200 to 1000), such as 1:200, 1:300, 1:400, 1:500, 1:600, 1:800, 1:1000, etc.; wherein the ratio of the thickness of the first coating layer A to the particle size of the matrix 10 may be 1:(500 to 5000), such as 1:500, 1:800, 1:1000, 1:1500, 1:1800, 1:2000, 1:2500, 1:3000, 1:3500, 1:4000, 1:4500, 1:5000, etc., and may be 1:(500 to 2000), and the ratio of the second coating layer B to the particle size of the matrix 20 may be 1:(200 to 1000), such as 1:200, 1:350, 1:500, 1:800, 1:1000, etc. Therefore, not only the functions of protecting the matrix material and improving the ionic conductivity of the coating layer can be ensured, but also the phenomenon that the resistance to the migration and diffusion of lithium ions is too large due to the excessive thickness of the coating layer can be avoided, thereby ensuring that the coating material can significantly improve the lithium ion conductivity of the positive electrode material, effectively improve the stability of the crystal structure of the positive electrode material in the process of the charge-discharge cycle, and significantly reduce the side reaction between the matrix material and the electrolyte.

In an embodiment, the lithium-rich manganese-based positive electrode material may have a particle size of 1 µm to 17 µm.

In an embodiment, the lithium-rich manganese-based positive electrode material has a particle size of 4 µm to 15 µm.

The inventor found that, on the one hand, the particle size of the lithium-rich manganese-based positive electrode material affects the intercalation and deintercalation rate of lithium ions in the positive electrode material and thus affects the rate performance of the material, and if the particle size is too large, the rate performance of the positive electrode material will deteriorate. On the other hand, the particle size of the positive electrode material also affects the direct current internal resistance of the battery, and excessive particle size leads to large resistance. In addition, the particle size of the positive electrode material also affects the overcharge performance of the battery, and proper particle size distribution facilitates the improvement of the compaction density of plates, thereby improving the energy density of the battery. In the present disclosure, the particle size of the lithium-rich manganese-based positive electrode material is controlled to be within the above-mentioned particle size range, and in this way, good rate performance and low resistance of the positive electrode material can be further ensured, but also the compaction density of the positive plate can be improved, and when the positive electrode material is used in the battery, the internal resistance of the battery can be reduced and the energy density of the battery can be improved.

In an embodiment provided by the present disclosure, the lithium-rich manganese-based positive electrode material has the following advantages. 1. Structurally, the positive electrode active material is composed of a matrix and a coating layer, wherein the coating layer material includes two different coating substances M"_{µ'}O_{ν"} and M‴_{µ"}O_{ν‴}, and on the one hand, both substances have low electrolyte reactivity and strong binding force with matrix materials Li_{1+α}Ni_{β}M_{µ}O_{2-ν}F_{ν}, and Li_{2+α'}M'O_{3-ν'}F_{ν'}, which can effectively anchor the surface structure of the matrix material and make the coating layer tightly bonded with the matrix material, thereby significantly improving the structural stability of the positive electrode material and preventing or inhibiting the side reaction between the matrix material and the electrolyte; on the other hand, M"_{µ'}O_{ν"} and/or M‴_{µ"}O_{ν‴} can have ultra-high ionic conductivity, and when being formed on the surface of the matrix material, can significantly improve the solid-liquid interface between the matrix material and the electrolyte, thereby significantly improving the migration and diffusion rate of lithium ions and enhancing the conductivity and rate performance of the positive electrode material. 2. The matrix materials Li_{1+α}Ni_{β}M_{µ}O_{2-ν}F_{ν} and Li_{2+α'}M'O_{3-ν'}F_{ν'} not only have a high energy density, but also have relatively low manganese content, which makes the resistance to lithium ion intercalation/deintercalation relatively small during charging and discharging under large current, which thus can significantly improve the rate performance and cycle performance of the positive electrode material; moreover, the manganese element can improve the structural stability of the positive electrode material, and compared with the oxygen element, the chemical bond formed by the fluorine element and the transition metal element is more stable, and the presence of both manganese and fluorine elements in the matrix material can achieve the effect of synergistically improving the stability of the crystal structure of the positive electrode material. To sum up, the lithium-rich manganese-based positive electrode material having the above-mentioned structure and general formula not only has good structural stability, high ionic conductivity, and no significant structural change during charging and discharging, but also has a high specific capacity and good rate performance and cycle performance, among which the specific discharge capacity at the rate of 1C is not less than 240 mAh/g and the capacity retention rate after 50 charge-discharge cycles is not less than 92%. Therefore, the positive electrode material can be widely used in the field of high energy density lithium batteries.

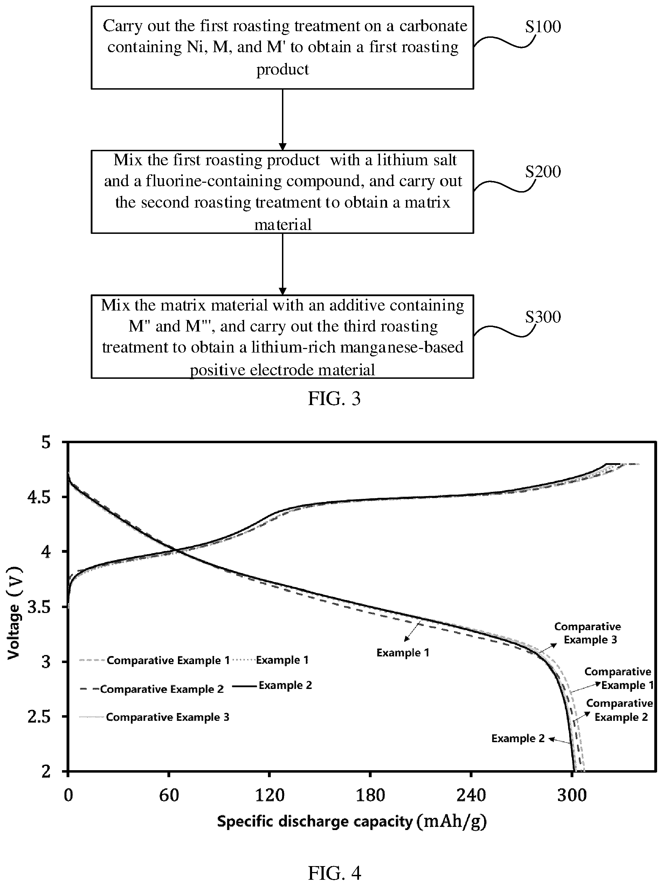

The present disclosure provides a method for preparing the above-mentioned lithium-rich manganese-based positive electrode material in an embodiment. With reference to FIG. 3, the method includes the following steps. (1) A first calcination treatment is carried out on a carbonate containing Ni, M, and M' to obtain a first calcination product, wherein at least one of M or M' includes Mn. (2) The first calcination product is mixed with a lithium salt and a fluorine-containing compound, and a second calcination treatment is carried out to obtain a matrix material. (3) The matrix material is mixed with an additive containing M" and M‴, and a third calcination treatment is carried out to obtain a lithium-rich manganese-based positive electrode material. The method is simple in process, and the lithium-rich manganese-based positive electrode material not only has good structural stability, high ionic conductivity, and no significant structural change during charging and discharging, but also has a high specific capacity and good rate performance and cycle performance, among which the specific discharge capacity at the rate of 1C is not less than 240 mAh/g and the capacity retention rate after 50 charge-discharge cycles is not less than 92%. Therefore, the positive electrode material can be widely used in the field of high energy density lithium batteries.

In an embodiment, in S100, a first calcination treatment is carried out on a carbonate containing Ni, M, and M' to obtain a first calcination product.

In an embodiment provided by the present disclosure, the carbonate containing Ni, M, and M' (M and/or M' includes Mn) is used as a precursor material, and the calcination treatment is carried out on the precursor material in advance to convert the carbonate precursor into corresponding oxides, so as to pave the way for subsequent preparation of the matrix material.

In an embodiment, the first calcination treatment may be carried out at a temperature of 300°C to 800°C for 4 hours to 12 hours in a calcination atmosphere of an oxygen-nitrogen environment with an oxygen content of 0 to 100 v%. For example, the calcination temperature may be 400°C to 700°C, 350°C, 450°C, 500°C, 550°C, 600°C, 650°C, 750°C, 800°C, etc., and the oxygen content in the calcination atmosphere may be 1 v%, 5 v%, 15 v%, 25 v%, 35 v%, 50 v%, 100 v%, etc.

In an embodiment, the oxygen content in the calcination atmosphere may be 22 v% to 28 v%, for example, may be 25%.

In an embodiment of the present disclosure, the operations of carrying out the calcination treatment on the precursor material in advance and controlling the calcination conditions can further facilitate the formation of the crystal structure of the lithium-rich manganese-based positive electrode material.

In an embodiment, before the first calcination treatment is carried out, the precursor material containing Ni, M, and M' may be ground in advance, which can significantly improve the efficiency and effect of the first calcination treatment.

In S200, the first calcination product is mixed with a lithium salt and a fluorine-containing compound, and a second calcination treatment is carried out to obtain a matrix material.

In an embodiment, the operations of mixing the first calcination product with the lithium salt and the fluorine-containing compound and carrying out the second calcination treatment can enable the first calcination product to be fully reacted with the lithium salt and the fluorine-containing compound to obtain a matrix material including Li_{1+α}Ni_{β}M_{µ}O_{2-ν}F_{ν} and Li_{2+α'}M'O_{3-ν'}F_{ν'}.

In an embodiment, the type of the lithium salt and the fluorine-containing compound in the present disclosure is not particularly limited and may be selected by those skilled in the art according to actual needs. For example, the lithium salt may be at least one selected from the group consisting of LiOH·H₂O, Li₂CO₃, BLi₃O₃, LiF, Li₃PO₄, LiHCO₃, LiNO₃, LiBO₂, Li₂SO₄, LiBF₄, and Li₂S, and the fluorine-containing compound may be at least one selected from the group consisting of MgF₂, LiF, NH₄F, ZnF₂, KF, NaF, AlF₃, ZrF₂, and LiBF₄.

In an embodiment, the second calcination treatment may be carried out at a temperature of 600°C to 950°C for 10 hours to 24 hours in a calcination atmosphere of an oxygen-nitrogen environment with an oxygen content of 0 to 100 v%. For example, the calcination temperature may be 600°C, 650°C 700°C, 750°C, 800°C, 850°C, 900°C, 950°C etc., and the oxygen content in the calcination atmosphere may be 2 v%, 5 v%, 10 v%, 25 v%, 35 v%, 50 v%, 100 v%, etc.

In an embodiment, the oxygen content in the calcination atmosphere may be 2 v% to 8 v%, for example, may be 5 v%.

The inventor found that if the temperature of the second calcination treatment is too low, sufficient thermodynamic driving force cannot be obtained, which affects the formation of the required crystal structure, and if the calcination temperature is too high, it is easy to lead to mixed crystals and volatilization of lithium; if the calcination time is too short, the required crystal structure is formed insufficiently, and if the calcination time is too long, the energy consumption becomes high and the production cost increases; if the oxygen concentration is too low during calcination, the transition metals cannot be oxidized to a suitable valence, and if the oxygen concentration is too high during calcination, the amountof transition metals oxidized to the highest valence increases, which reduces the electrochemical activity of the materials. In an embodiment of the present disclosure, the operation of controlling the above-mentioned calcination conditions can further facilitate the full reaction between the first calcination product and the lithium salt and the fluorine-containing compound and promote the formation of the crystal structure of the lithium-rich manganese-based positive electrode material to obtain the matrix material including Li_{1+α}Ni_{β}M_{µ}O_{2-ν}F_{ν} and Li_{2+α'}M'O_{3-ν'}F_{ν'}.

In an embodiment, before the second calcination treatment is carried out, the first calcination product, the lithium salt, and the fluorine-containing compound may be ground in advance, which can significantly improve the efficiency and effect of the second calcination treatment.

In S300, the matrix material is mixed with an additive containing M" and M‴, and a third calcination treatment is carried out to obtain a lithium-rich manganese-based positive electrode material.

In an embodiment, the operations of mixing the matrix material with the additive containing M" and M'" and performing the calcination treatment can enable M"_{µ'}O_{ν"} and M‴_{µ"}O_{ν‴} to be tightly bonded with the surface layer of the matrix material to form a nano-coating layer structure, which can enhance the conductivity, improve the structural stability of the positive electrode material, and prevent the side reaction between the matrix material and the electrolyte.

In an embodiment, the third calcination treatment may be carried out at a temperature of 300°C to 900°C for 1 hour to 12 hours in a calcination atmosphere of an oxygen-nitrogen environment with an oxygen content of 0 to 100 v%. For example, the calcination temperature may be 400°C to 700°C, 350°C, 450°C, 500°C, 550°C, 600°C, 650°C, 750°C, 800°C, etc., and the oxygen content in the calcination atmosphere may be 1 v%, 5 v%, 15 v%, 25 v%, 35 v%, 50 v%, 100 v%, etc.

In an embodiment, the oxygen content in the calcination atmosphere may be 2 v% to 8 v%, for example, may be 5 v%.

The inventor found that the appropriate calcination temperature, time, and oxygen content are the necessary conditions for forming the required coating layer and determine the chemical state of metal elements in the coating material and the bonding state with the matrix material. In the present disclosure, the operation of controlling the calcination conditions can further facilitate the tight bonding of the coating layer material and the surface of the matrix and significantly improve the bonding strength of the coating layer and the matrix, thereby further improving the structural stability of the positive electrode material and preventing the side reaction between the matrix material and the electrolyte.

In an embodiment, before the third calcination treatment is carried out, the additive and the matrix material may be ground in advance, which can significantly improve the efficiency and effect of the third calcination treatment.

In an embodiment, the additive may include a first additive containing M"/M‴ and a second additive containing M‴/M", wherein the first additive may be at least one selected from the group consisting of LiNbO₃, NbF₅, C₁₅H₃₅NbO₅, Nb₂O₅, NbO₂, Nb₂O₃, NbS₂, C₂H₆NbO, and NbF₄, and the second additive may be at least one selected from the group consisting of Li₄Ti₅O₁₂, Li₂TiO₃, TiO₂, C₁₂H₂₈TiO₄, TiF₄, Ti(OH)₄, and Ti(SO₄)₂. The main function of the first additive is to enhance the ionic conductivity of the positive electrode material, and the main function of the second additive is to protect the positive electrode material, improve the structural stability of the positive electrode material, and reduce the side reaction between the positive electrode material and the electrolyte. Therefore, coating materials with different properties can be formed on the surface of the matrix material at the same time, thereby further facilitating the improvement of the rate performance, cycle life, and cycle capacity retention rate of the lithium-rich manganese-based positive electrode material.

In an embodiment, the molar ratio of the first additive to the second additive is (0.001 to 0.03):1, and the molar ratio of the additive to the matrix material is (0.01 to 1):1. The inventor found that the operation of controlling the above-mentioned mass ratio can further facilitate the control of the thickness of the coating layer formed on the surface of the matrix and ensure that the ratio of the thickness of the coating layer to the particle size of the matrix can reach 1:(200 to 1000). The thickness of the first coating layer may be 0.1 nm to 100 nm, and the ratio of the thickness of the first coating layer to the particle size of the matrix may be 1:(500 to 5000) or 1:(500 to 2000); the thickness of the second coating layer may be 0.1 nm to 200 nm, and the ratio of the thickness of the second coating layer to the particle size of the matrix 20 may be 1:(200 to 1000), thereby ensuring that the coating layer material can significantly improve the conductivity of lithium ions of the positive electrode material, effectively improve the stability of the crystal structure of the positive electrode material in the process of the charge-discharge cycle, and prevent the side reaction between the matrix material and the electrolyte.

In an embodiment, the first additive and the second additive may each independently have a particle size of 1 nm to 200 nm, such as 1 nm to 10 nm, 1 nm to 20 nm, 20 nm to 100 nm, etc., and in this way, the relative density of the coating layer and the bonding strength between the coating layer and the matrix can be further improved, thereby further facilitating the improvement of the stability of the crystal structure of the positive electrode material in the process of the charge-discharge cycle and preventing the side reaction between the matrix material and the electrolyte.

In an embodiment, the matrix material may be fully mixed with the first additive and the second additive and then the calcination treatment is carried out once to obtain the lithium-rich manganese-based positive electrode material with the structure shown in FIG. 2, or the matrix material may be mixed with the first additive and a primary coating calcination treatment is carried out to obtain a primary coating calcination product, then the primary coating calcination product is mixed with the second additive and a secondary coating calcination treatment is carried out, so as to obtain the lithium-rich manganese-based positive electrode material with the structure shown in FIG. 1.

In an embodiment, the primary coating calcination treatment and the secondary coating calcination treatment may each independently be carried out at a temperature of 300°C to 900°C for 1 hour to 12 hours in a calcination atmosphere of an oxygen-nitrogen environment with an oxygen content of 0 to 100 v%.

In an embodiment provided by the present disclosure, the method for preparing the lithium-rich manganese-based positive electrode material has the following advantages. (1) The method has a simple process and low cost. (2) The first calcination treatment is carried out on the carbonate precursor in advance so that the carbonate precursor can be converted into corresponding oxides; the first calcination product is then mixed with a lithium salt and a fluorine-containing compound and the second calcination treatment is carried out to obtain a matrix material including Li_{1+α}Ni_{β}M_{µ}O_{2-ν}F_{ν} and Li_{2+α}M'O_{3ν'}Fν_{'}, wherein the matrix material not only has high energy density, but also has relatively low manganese content, which makes the resistance to lithium ion intercalation/deintercalation relatively small during charging and discharging under large current densities, which thus can significantly improve the rate performance and cycle performance of the positive electrode material, and compared with the oxygen element, the chemical bond formed by the fluorine element and the transition metal element is more stable, and the presence of both manganese and fluorine elements in the matrix material can achieve the effect of synergistically improving the stability of the crystal structure of the positive electrode material; then the matrix material is mixed with an additive containing M" and M'" for a third calcination so that the coating materials M"_{µ'}O_{ν"} and M‴_{µ"}O_{ν‴} can be formed on the surface of the matrix material and the coating materials are tightly bonded on the surface of the matrix material, thereby enhancing the conductivity, improving the structural stability of the positive electrode material, and preventing the side reaction between the matrix material and the electrolyte. (3) The lithium-rich manganese-based positive electrode material prepared by the method not only has good structural stability, high ionic conductivity, and no significant structural change during charging and discharging, but also has a high specific capacity and good rate performance and cycle performance, among which the specific discharge capacity at the rate of 1C is not less than 240 mAh/g and the capacity retention rate after 50 charge-discharge cycles is not less than 92%. Therefore, the positive electrode material can be widely used in the field of high energy density lithium batteries.

The present disclosure provides a lithium battery in an embodiment. The lithium battery includes the above-mentioned lithium-rich manganese-based positive electrode material or a lithium-rich manganese-based positive electrode material prepared by the above-mentioned preparation method. The lithium battery has high energy density, high initial specific discharge capacity, good rate performance and cycle stability, and long cycle life and can be widely used in the field of new energy vehicles.

The present disclosure provides a vehicle in an embodiment. The vehicle includes the above-mentioned lithium battery. The vehicle has high safety and long endurance mileage.

Typical but non-restrictive examples of the present disclosure are described below.

### Example 1

1 mol of Ni_{0.2}Co_{0.2}Mn_{0.6}CO₃ was calcined in a calciner at 700°C for 8 hours in a O₂/N₂ atmosphere with an oxygen content of 2 v%, then together with 1.53 mol of LiOH·H₂O and 0.0099 mol of NH₄F, thoroughly ground and mixed in a mortar, and then calcined in the calciner at 820°C for 12 hours in the O₂/N₂ atmosphere with an oxygen content of 2 v%. The calcined powder sample (i.e., the matrix material) and 0.005 mol of LiNbO₃ were fully ground and mixed in a planetary ball mill, then calcined in the calciner at 850°C for 10 hours in the O₂/N₂ atmosphere with an oxygen content of 2 v%. Then, the calcined powder sample (primary coating calcination product) and 0.005 mol of Li₄Ti₅O₁₂ were fully ground and mixed in the planetary ball mill and then calcined at 800°C for 10 hours in the O₂/N₂ atmosphere with an oxygen content of 2 v% to obtain a lithium-rich manganese-based positive electrode material whose chemical formula was as follows: 0.44Li_{0.978}Ni_{0.454}Co_{0.454}Mn_{0.114}O_{1.99}F_{0.01}·0.55Li₂MnO_{2.99}F_{0.01}·0.005LiNbO₃·0.005Li₄Ti₅O₁₂. The region of the coating materials LiNbO₃ and Li₄Ti₅O₁₂ on the surface of the particles of the positive electrode material spatially showed a layered, packed, ordered distribution structure as shown in FIG. 1, the region of LiNbO₃ was located on the surface of the matrix and the region of Li₄Ti₅O₁₂ was located on the region of LiNbO₃.

The particle size of the positive electrode material was 13 µm.

The thickness of the region of LiNbO₃ was 50 nm, and the thickness of the region of Li₄Ti₅O₁₂ was 120 nm.

### Example 2

1 mol of Ni_{0.2}Co_{0.2}Mn_{0.6}CO₃ was calcined in a calciner at 700°C for 8 hours in a O₂/N₂ atmosphere with an oxygen content of 2 v%, then together with 1.53 mol of LiOH·H₂O and 0.0099 mol of NH₄F, thoroughly ground and mixed in a mortar, and then calcined in the calciner at 820°C for 12 hours in the O₂/N₂ atmosphere with an oxygen content of 2 v%. 0.005 mol of LiNbO₃ and 0.005 mol of Li₄Ti₅O₁₂ were fully ground and mixed in a planetary ball mill, and then the calcined powder material (the matrix material) was added into the planetary ball mill, fully ground and mixed together with an additive, and calcined in the calciner at 810°C for 12 hours in the O₂/N₂ atmosphere with an oxygen content of 2 v% to obtain a lithium-rich manganese-based positive electrode material whose chemical formula was as follows: 0.44Li_{0.978}Ni_{0.454}Co_{0.454}Mn_{0.114}O_{1.99}F_{0.01}·0.55Li₂MnO_{2.99}F_{0.01}·0.005LiNbO₃·0.005Li₄Ti₅O₁₂. The region of the coating materials LiNbO₃ and Li₄Ti₅O₁₂ on the surface of the particles of the positive electrode material spatially showed a continuous, alternate, ordered distribution structure as shown in FIG. 2.

The particle size of the positive electrode material was 13 µm.

In the region of LiNbO₃ and Li₄Ti₅O₁₂, the thickness of LiNbO₃ was 70 nm, and the thickness of Li₄Ti₅O₁₂ was 160 nm.

### Example 3

The difference between Example 3 and Example 1 is that in Example 3, the addition amount of Li₄Ti₅O₁₂ was 0.5 mol.

In this example, the particle size of the positive electrode material was 13 µm.

The thickness of the region of LiNbO₃ was 50 nm, and the thickness of the region of Li₄Ti₅O₁₂ was 850 nm.

### Example 4

The difference between Example 4 and Example 1 is that in Example 4, the calcined powder sample (primary coating calcination product) and 0.005 mol of Li₄Ti₅O₁₂ were fully ground and mixed in a planetary ball mill and then calcined under the following conditions:
the calcination temperature was 700°C, the calcination atmosphere was an O₂/N₂ atmosphere with an oxygen content of 5 v%, and the calcination time was 12 hours.

In this example, the particle size of the positive electrode material was 13 µm.

The thickness of the region of LiNbO₃ was 50 nm, and the thickness of the region of Li₄Ti₅O₁₂ was 110 nm.

### Example 5

The difference between Example 5 and Example 1 is that in Example 5, the calcined powder sample (primary coating calcination product) and 0.005 mol of Li₄Ti₅O₁₂ were fully ground and mixed in a planetary ball mill and then calcined under the following conditions:
the calcination temperature was 400°C.

In this example, the particle size of the positive electrode material was 13 µm.

The thickness of the region of LiNbO₃ was 50 nm, and the thickness of the region of Li₄Ti₅O₁₂ was 20 nm.

### Comparative Example 1

1 mol of Ni_{0.2}Co_{0.2}Mn_{0.6}CO₃ was calcined in a calciner at 700°C for 8 hours in a O₂/N₂ atmosphere with an oxygen content of 2 v%, then together with 1.53 mol of LiOH·H₂O and 0.0099 mol of NH₄F, thoroughly ground and mixed in a mortar, and then calcined in the calciner at 820°C for 12 hours in the O₂/N₂ atmosphere with an oxygen content of 2 v%. The calcined powder sample (i.e., the matrix material) and 0.01 mol of LiNbO₃ were fully ground and mixed in a planetary ball mill, then calcined in the calciner at 850°C for 10 hours in the O₂/N₂ atmosphere with an oxygen content of 2 v% to obtain a lithium-rich manganese-based positive electrode material whose chemical formula was as follows: 0.44Li_{0.978}Ni_{0.454}Co_{0.454}Mn_{0.114}O_{1.99}F_{0.01}·0.55Li₂MnO_{2.99}F_{0.01}·0.01LiNbO₃.

### Comparative Example 2

1 mol of Ni_{0.2}Co_{0.2}Mn_{0.6}CO₃ was calcined in a calciner at 700°C for 8 hours in a O₂/N₂ atmosphere with an oxygen content of 2 v%, then together with 1.53 mol of LiOH·H₂O and 0.0099 mol of NH₄F, fully ground and mixed in a mortar, and then calcined in the calciner at 820°C for 12 hours in the O₂/N₂ atmosphere with an oxygen content of 2 v%. The calcined powder sample (i.e., the matrix material) and 0.01 mol of Li₄Ti₅O₁₂ were fully ground and mixed in a planetary ball mill, then calcined in the calciner at 800°C for 10 hours in the O₂/N₂ atmosphere with an oxygen content of 2 v% to obtain a lithium-rich manganese-based positive electrode material whose chemical formula was as follows: 0.44Li_{0.978}Ni_{0.454}Co_{0.454}Mn_{0.114}O_{1.99}F_{0.01}·0.55Li₂MnO_{2.99}F_{0.01}·0.01Li₄Ti₅O₁₂.

### Comparative Example 3

1 mol of Ni_{0.2}Co_{0.2}Mn_{0.6}CO₃ was calcined in a calciner at 700°C for 8 hours in a O₂/N₂ atmosphere with an oxygen content of 2 v%, then together with 1.53 mol of LiOH·H₂O and 0.0099 mol of NH₄F, fully ground and mixed in a mortar, and then calcined in the calciner at 820°C for 12 hours in the O₂/N₂ atmosphere with an oxygen content of 2 v% to obtain a lithium-rich manganese-based positive electrode material whose chemical formula was as follows: 0.44Li_{0.978}Ni_{0.454}Co_{0.454}Mn_{0.114}O_{1.99}F_{0.01}·0.55Li₂MnO_{2.99}F_{0.01}.

Evaluation of the electrochemical performance of lithium-rich manganese-based positive electrode materials obtained in Examples 1 to 5 and Comparative Examples 1 to 3

Electrical performance evaluation method:
A button battery was assembled by using lithium metal sheets in a glove box filled with argon. The positive plate consisted of 92 wt% active material, 4 wt% conductive carbon black (Super-P) conductive agent, and 4 wt% polyvinylidene fluoride (PVDF) binder. The electrolyte consisted of 1 mol of lithium hexafluorophosphate (LiPF₆), the same volume of ethylene carbonate and dimethyl carbonate, and corresponding additives.

The test system of the first charge-discharge test was that the voltage window was 2 V to 4.8 V and the charge-discharge rate was 0.1C; the rate performance was measured at 0.1C, 0.2C, 0.5C, 1C, and 2C, respectively, and the voltage window was 2 V to 4.6 V.

Result and conclusion:
FIG. 4 is a diagram showing the specific capacity changes of button batteries assembled with the lithium-rich manganese-based positive electrode materials obtained in Example 1, Example 2, and Comparative Examples 1 to 3 in the first charge-discharge process. As can be seen in FIG. 1, the specific capacity corresponding to each of the examples and the comparative examples ranged from 330 mAh/g to 340 mAh/g, and the specific discharge capacity ranged from 300 mAh/g to 306 mAh/g, which showed that the specific discharge capacities of the positive electrode materials corresponding to Examples 1 and 2 were above 300 mAh/g at a rate of 0.1C, these positive electrode materials had the advantage of high specific capacity, the formation of the coating layer on the surface of the matrix material had no negative impact on the specific discharge capacity, and the specific capacity can be further improved after Nb modification.

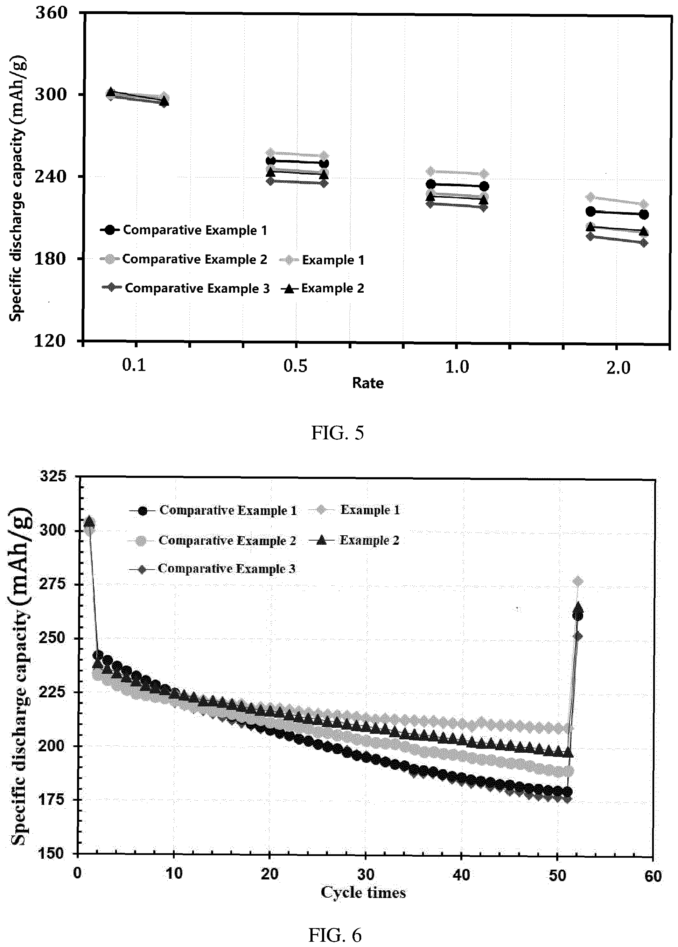

FIG. 5 shows the specific discharge capacities of the button batteries assembled by the lithium-rich manganese-based positive electrode materials obtained in Example 1, Example 2, and Comparative Examples 1 to 3 at different rates. As can be seen from FIG. 5, the formation of a nano-scale LiNbO₃ coating layer on the surface of the matrix material can greatly improve the rate performance of the lithium-rich manganese-based positive electrode material; the formation of a nano-scale Li₄Ti₅O₁₂ coating layer on the surface of matrix/LiNbO₃ coating layer can also improve the rate performance of lithium-rich manganese-based positive electrode material to a certain extent, but the improvement effect was not as good as the former; the lithium-rich manganese-based positive electrode material with the coating structure as shown in FIG. 1 formed on the matrix surface had the best rate performance.

FIG. 6 is a comparison diagram of specific discharge capacities of button batteries assembled with lithium-rich manganese-based positive electrode materials obtained in Example 1, Example 2, and Comparative Examples 1 to 3 with different numbers of cycles. As can be seen from FIG. 6, after 50 cycles, compared with the lithium-rich manganese-based positive electrode materials of Comparative Examples 1 to 3, the lithium-rich manganese-based positive electrode materials obtained in Example 1 and Example 2 had better capacity retention rate and slower capacity attenuation rate with the same number of cycles, the formation of the Li₄Ti₅O₁₂ coating layer on the surface of the matrix material can significantly improve the cycle performance of the lithium-rich manganese-based positive electrode material, and the formation of the LiNbO₃ coating layer effect on the surface of matrix material had no obvious effect on the improvement of the cycle capacity retention rate of the lithium-rich manganese-based positive electrode material.

The specific discharge capacity of the button battery assembled with the lithium-rich manganese-based positive electrode material obtained in Example 3 at the rate of 0.1C was 285 mAh/g, the specific discharge capacity was 223 mAh/g at the rate of 1C, and the capacity retention rate was not less than 97.1% after 50 charge-discharge cycles. When the amount of the second coating material was increased to 0.5 mol, the discharge specific capacity was reduced, but the cycle performance was improved.

The specific discharge capacity of the button battery assembled with the lithium-rich manganese-based positive electrode material obtained in Example 4 at the rate of 0.1C was 298 mAh/g, the specific discharge capacity was 231 mAh/g at the rate of 1C, and the capacity retention rate was not less than 96.0% after 50 charge-discharge cycles. When the temperature was lowered, the coating effect of the second coated layer decreased, which affected the cycle performance but had little effect on the specific discharge capacity.

The specific discharge capacity of the button battery assembled with the lithium-rich manganese-based positive electrode material obtained in Example 5 at the rate of 0.1C was 290 mAh/g, the specific discharge capacity was 227 mAh/g at the rate of 1C, and the capacity retention rate was not less than 92.3% after 50 charge-discharge cycles. When the temperature was lowered, a coating layer with a predetermined thickness can hardly be formed.

To sum up, the lithium-rich manganese-based positive electrode material with the coating layer structure described in the above-mentioned embodiments of the present disclosure has good rate performance and cycle performance, high initial coulombic efficiency, a discharge specific capacity of not less than 223 mAh/g at the rate of 1C, and a capacity retention rate of not less than 92% after 50 charge-discharge cycles.

## Claims

1. A lithium-rich manganese-based positive electrode material, being of a general formula of aLi_{1+α}Ni_{β}M_{µ}O_{2-ν}F_{ν}·bLi_{2-α'}M'O_{3-ν'}F_{ν'}·cM"_{µ'}O_{v"}·dM‴_{µ"}O_{ν"},
wherein
a + b + c + d = 1, wherein 0 < a < 0.5, 0 < b < 0.6, 0 < c ≤ 0.02, and 0 < d ≤ 0.02;
-0.03 ≤ α ≤ 0.04, 0.4 < β ≤ 1, 0 ≤ µ < 0.6, and 0.005 ≤ v ≤ 0.02;
0.005 ≤ α' ≤ 0.04, and 0.005 ≤ ν' ≤ 0.02;
1 ≤ µ' ≤ 9, and 1 ≤ v" ≤ 12;
1 ≤ µ" ≤ 9, and 1 ≤ ν‴ ≤ 12;
M is at least one selected from the group consisting of Ni, Co, Mn, Al, Mg, Ti, Zr, Zn, Ca, B, Ce, and Cr;
M' is at least one selected from the group consisting of Mn, Ce, Al, Ti, and Mg, and at least one of M' or M comprises Mn;
M" is at least one selected from the group consisting of Ti, Li, P, Nb, Al, Mg, Zr, Zn, Ca, B, Ce, and Cr;
M'" is at least one selected from the group consisting of Ti, Nb, B, Al, Mg, Zr, Zn, Ca, B, Ce, Li, and Cr, and M'" and M" are not identical; and
the positive electrode material comprises a matrix and a coating layer, wherein the coating layer is coated on the matrix, the matrix comprises Li_{1+α}Ni_{β}M_{µ}O_{2-ν}F_{ν} and Li_{2+α'}M'O_{3-ν'}F_{ν'}, and the coating layer comprises M"_{µ'}O_{ν"} and M‴_{µ"}O_{ν‴}.

2. The positive electrode material according to claim 1, wherein the coating layer comprises a first coating layer and a second coating layer, wherein the first coating layer is coated on the matrix and the second coating layer is coated on the first coating layer; or the first coating layer and the second coating layer are alternately coated on the matrix.

3. The positive electrode material according to claim 2, wherein the first coating layer has a thickness of 0.1 nm to 100 nm, and the second coating layer has a thickness of 0.1 nm to 200 nm.

4. The positive electrode material according to claim 3, wherein the first coating layer has a thickness of 20 nm to 60 nm.

5. The positive electrode material according to claim 3, wherein the second coating layer has a thickness of 20 nm to 100 nm.

6. The positive electrode material according to any one of claims 1 to 5, wherein the positive electrode material has a particle size of 1 µm to 17 µm.

7. The positive electrode material according to claim 6, wherein the positive electrode material has a particle size of 4 µm to 15 µm.

8. The positive electrode material according to any one of claims 1 to 7, wherein the positive electrode material has a specific discharge capacity not less than 240 mAh/g at a rate of 1C and a capacity retention rate not less than 92% after 50 charge-discharge cycles.

9. A method for preparing the positive electrode material according to any one of claims 1 to 8, comprising:
(1) carrying out a first calcination treatment on a carbonate containing Ni, M, and M' to obtain a first calcination product, wherein at least one of M or M' comprises Mn;
(2) mixing the first calcination product with a lithium salt and a fluorine-containing compound, and carrying out a second calcination treatment to obtain a matrix material; and
(3) mixing the matrix material with an additive containing M" and M‴, and carrying out a third calcination treatment to obtain a lithium-rich manganese-based positive electrode material.

10. The method according to claim 9, wherein, in step (1), the first calcination treatment is carried out at a temperature of 300°C to 800°C for 4 hours to 12 hours in a calcination atmosphere of an oxygen-nitrogen environment with an oxygen content of 0 to 100 v%.

11. The method according to claim 9 or 10, wherein, in step (2), the second calcination treatment is carried out at a temperature of 600°C to 950°C for 10 hours to 24 hours in a calcination atmosphere of an oxygen-nitrogen environment with an oxygen content of 0 to 100 v%.

12. The method according to any one of claims 9 to 11, wherein, in step (2), the lithium salt is at least one selected from the group consisting of LiOH·H₂O, Li₂CO₃, LiBO₂, BLi₃O₃, Li₃PO₄, LiF, LiHCO₃, LiBF₄, and Li₂S, and the fluorine-containing compound is at least one selected from the group consisting of MgF₂, LiF, NH₄F, ZnF₂, KF, NaF, AlF₃, ZrF₂, and LiBF₄.

13. The method according to any one of claims 9 to 12, wherein, in step (3), the third calcination treatment is carried out at a temperature of 300°C to 900°C for 1 hour to 12 hours in a calcination atmosphere of an oxygen-nitrogen environment with an oxygen content of 0 to 100 v%.

14. The method according to any one of claims 9 to 13, wherein the additive comprises a first additive containing M"/M‴ and a second additive containing M"'/M", wherein the first additive is at least one selected from the group consisting of LiNbO₃, NbF₅, C₁₅H₃₅NbO₅, Nb₂O₅, NbO₂, Nb₂O₃, NbS₂, C₂H₆NbO, and NbF₄, and the second additive is at least one selected from the group consisting of Li₄Ti₅O₁₂, Li₂TiO₃, TiO₂, C₁₂H₂₈TiO₄, TiF₄, Ti(OH)₄, and Ti(SO₄)₂.

15. The method according to any one of claims 9 to 14, wherein a molar ratio of the additive to the matrix material is (0.001 to 0.03):1, and a molar ratio of the first additive to the second additive is (0.01 to 1):1.

16. The method according to any one of claims 9 to 15, wherein the first additive and the second additive each independently have a particle size of 1 nm to 200 nm.

17. The method according to any one of claims 9 to 16, wherein, step (3) comprises:
(3-1) mixing the matrix material with the first additive, and carrying out a primary coating calcination treatment to obtain a primary coating calcination product; and
(3-2) mixing the primary coating calcination product with the second additive, and carrying out a secondary coating calcination treatment to obtain a lithium-rich manganese-based positive electrode material.

18. The method according to claim 17, wherein the primary coating calcination treatment and the secondary coating calcination treatment are each independently carried out at a temperature of 300°C to 900°C for 1 hour to 12 hours in a calcination atmosphere of an oxygen-nitrogen environment with an oxygen content of 0 to 100 v%.

19. A lithium battery, comprising the positive electrode material according to any one of claims 1 to 8 or a positive electrode material prepared by the method according to any one of claims 9 to 18.

20. A vehicle, comprising the lithium battery according to claim 19.
